# EUROPEAN PATENT APPLICATION

(11) **EP 1 338 575 A1**
(43) Date of publication of application: **27.08.2003**
(21) Application number: 01976651.8
(22) Date of filing: 10.10.2001
(51) Int. Cl.: C03C 13/00, C03C 25/00, D01F 9/08

(54) **GLASS COMPOSITION FOR PRODUCTION OF INORGANIC FIBERS AND PRODUCTS OF FORMING THEREOF**

(30) Priority: 11.10.2000 JP 2000310304
(71) Applicant: Paramount Glass Manufacturing Co., Ltd., Koriyama-shim, Fukushima 963-8017 (JP); NITTO BOSEKI CO., LTD., Fukushima-shi, Fukushima 960-8161 (JP)
(72) Inventor: OTAKI, Keiji, Koriyama-Shi, Fukushima 963-8025 (JP); SHINOBU, Yukiyoshi, Koriyama-Shi, Fukushima 963-0201 (JP); BABA, Naoko, Koriyama-Shi, Fukushima 963-0105 (JP)
(74) Representative: Spencer, Michael David, Dr.
(86) International application number: JP0108877
(87) International publication number: WO02030843

(57) **Abstract**

A glass composition to be used for manufacturing inorganic fiber has a composition that entirely or partly eliminates the use of expensive boron oxide that is employed to lower the glass softening point and the viscosity. The glass composition contains 45 to 75 wt% of SiO₂, 1 to 6 wt% of Al₂O₃, 0 to 4 wt% of MgO, 0 to 15 wt% of CaO, 0 to 6 wt% of B₂O₃, 0.1 to 10 wt% of BaO, 0.1 to 25 wt% of SrO, 5 to 17 wt% of Na₂O, 0.5 to 10 wt% of K₂O and 0 to 3.5 wt% of Fe₂O₃.

## Description

### BACKGROUND OF THE INVENTION

### Field of the Invention

This invention relates to a glass composition to be used for manufacturing inorganic fibers. The present invention also relates to a molded article manufactured from such inorganic fiber and a method of manufacturing such a molded article.

### Related Background Art

Glass materials for manufacturing inorganic fiber (glass fiber, glass wool, etc.) is to be used for producing molded products of thermally insulating inorganic fiber such as glass wool. It is preferable that such glass materials show a low glass softening point and a low glass viscosity, from the viewpoint of the properties of the inorganic fiber to be manufactured, the durability of the manufacturing apparatus and other factors. Generally, glass materials contain calcium oxide CaO and magnesium oxide MgO as well as other compounds. The liquid phase temperature of the material is raised when the CaO content rises from an adequately level. The viscosity of the material is also raised when the MgO content rises from an adequate level. For this reason, conventionally, boron oxide B₂O₃ and/or sodium oxide Na₂O are added along with other additives to the glass material in order to reduce the glass softening point and the glass viscosity and to prevent the liquid phase temperature from rising.

However, borax Na₂B₄O₇ · nH₂O that provides the raw material of boron oxide is expensive and accompanied by problems including that of scattering during the compounding process. Therefore, there is a strong demand for compositions that can replace boron oxide in order to reduce the amount or rate of boron oxide. Additionally, soda ash Na₂O₃ that provides the raw material of sodium oxide is also expensive, and gives rise to a problem of degrading the chemical durability of the molded article of inorganic fiber if it is added excessively. Thus, the rate at which sodium oxide is added is limited.

Additionally, plate glass cullet and bottle glass cullet are conventionally used for producing glass fiber. Plate glass cullet is currently in short supply. On the other hand, bottle glass cullet generally shows a high liquid phase temperature. Particularly, deeply colored bottle glass cullet originating from wine bottles etc. gives problems from the viewpoint of manufacturing facility and operation stability when the substance is added excessively to the glass material for manufacturing an inorganic fiber composition, because it poorly transmits heat, and shows a high liquid phase temperature mainly due to the dense color thereof. Therefore, improvements are needed to the process of treating bottle glass cullet in order to boost the utilization thereof.

Furthermore, a large volume of waste glass is being produced currently from cathode ray tubes of television sets and those of computer displays. The treatment and reutilization of such waste glass is a serious problem to be dissolved urgently.

### SUMMARY OF THE INVENTION

In an aspect of the invention, the above problems are solved by providing a glass composition to be used for manufacturing inorganic fiber, said glass composition containing 45 to 75 wt% of SiO₂, 1 to 6 wt% of Al₂O₃, 0 to 4 wt% of MgO, 0 to 15 wt% of CaO, 0 to 6 wt% of B₂O₃, 0.1 to 10 wt% of BaO, 0.1 to 25 wt% of SrO, 5 to 17 wt% of Na₂O, 0.5 to 10 wt% of K₂O and 0 to 3.5 wt% of Fe₂O₃.

Preferably, said glass composition contains 0.5 to 25 wt% of BaO and SrO, 0.2 to 15 wt% of CaO and MgO, and 6 to 24 wt% of Na₂O and K₂O.

Preferably, said glass composition is made of a raw material for manufacturing the composition containing 5 to 100 wt% of cathode ray tube glass.

In another aspect of the invention, there is provided a method of manufacturing an inorganic fiber molding, said method comprising:
melting the above-described glass composition to be used for manufacturing inorganic fiber in a melting furnace;
fining the molten glass composition into fine glass fiber in a fiber forming equipment;
blowing a binder to the glass fiber to provide it with shape stability and load characteristics;
molding the glass fiber into an inorganic fiber molding having a predetermined density and a predetermined thickness by means of a fiber condenser and a drier, and
subsequently cutting the molding to produce a finished product.

In still another aspect of the invention, there is provided an inorganic fiber molding manufactured by using the above-described glass composition to be used for manufacturing inorganic fiber.

### PREFERRED EMBODIMENT OF THE INVENTION

A glass composition to be used for manufacturing inorganic fiber according to the invention contains 45 to 75 wt% of silicon dioxide (SiO₂), 1 to 6 wt% of aluminum oxide (Al₂O₃), 0 to 4 wt% of magnesium oxide (MgO), 0 to 15 wt% of calcium oxide (CaO), 0.1 to 10 wt% of barium oxide (BaO), 0.1 to 25 wt% of strontium oxide (SrO), 5 to 17 wt% of sodium monoxide (Na₂O), and 0.5 to 10 wt% of potassium oxide (K₂O).

If the SiO₂ content is less than 45 wt%, the chemical durability of the obtained glass molding is degraded. If the content exceeds 75 wt%, the softening point of the glass rises to make it difficult to melt the glass, and the viscosity of the glass also rises.

If the Al₂O₃ content is less than 1 wt%, the obtained inorganic fiber molding does not show satisfactory chemical durability. If the content exceeds 6 wt%, the viscosity of the glass rises.

The glass composition to be used for manufacturing inorganic fiber according to the invention contains 0 to 15 wt% of CaO and 0 to 4 wt% of MgO. If the CaO content exceeds 15%, the liquid phase temperature rises to make the manufacturing process disadvantageously unstable. If the MgO content exceeds 4 wt%, the viscosity of the glass rises .

Preferably, for the purpose of the invention, the content of both CaO and MgO is 0.2 to 15 wt%. If the added content of the two ingredients is less than 0.2 wt%, the viscosity of the glass rises. If the added content exceeds 15 wt%, the liquid phase temperature rises .

It is essential for the glass composition according to the invention to contain BaO and SrO. BaO and SrO reduce the viscosity and lower the softening point of the glass. Furthermore, they do not raise the liquid phase temperature unlike CaO nor the viscosity of the obtained glass unlike MgO. The glass composition contains 0.1 to 0 wt% of BaO and 0.1 to 25 wt% of SrO. If the content of each of them is less than 0.1 wt%, neither reduction of the glass viscosity nor lowering of the liquid phase temperature is realized. If the BaO content exceeds 10 wt%, the material of the melting furnace is excessively corroded to curtail the service life of the furnace, and to raise the maintenance cost, so that no desired cost reduction can be achieved. Generally, cathode ray tube glass contains SrO up to about 25 wt%. If the glass composition according to the invention is required to contain more than 25 wt%, SrO needs to be added from a source other than cathode ray tube glass. Because SrO is very expensive, no desired cost reduction can be achieved.

The sum of the BaO content and the SrO content is between 0.5 and 25 wt% for the purpose of the invention. These limits are defined by considering the quality (restoring rate) of an inorganic fiber molding manufactured from the glass composition according to the invention.

The glass composition to be used for manufacturing inorganic fiber according to the invention contains 5 to 17 wt% of Na₂O and 0.5 to 10 wt% of K₂O. If the Na₂O content is less than 5 wt%, the glass viscosity rises to decrease the operability of the glass fiber forming equipment. If the content exceeds 17 wt%, the chemical durability of the obtained glass is degraded. Likewise, if the K₂O content is less than 5 wt%, the glass viscosity rises to decrease the operability of the glass fiber forming equipment. If the K₂O content exceeds 10 wt%, the material of the melting furnace is excessively corroded to curtail the service life of the furnace and to raise the maintenance cost, so that no desired cost reduction can be achieved.

Preferably, for the purpose of the invention, the sum of the contents of Na₂O and K₂O is 6 to 24 wt%. if the added content of the two ingredients is less than 6 wt%, the viscosity of the glass rises. If the added content exceeds 24 wt%, the chemical durability of the glass is degraded .

The glass composition to be used for manufacturing inorganic fiber according to the invention may additionally contain 0 to 0.6 wt% of zinc oxide (ZnO), 0 to 0.5 wt% of lithium oxide (Li₂O), 0 to 5 wt% of zirconium oxide (ZrO₂), 0 to 0.5 wt% of titanium dioxide (TiO₂), 0 to 3.5 wt% of triiron tetraoxide (Fe₂O₃), 0 to 0.025 wt% of phosphorus pentaoxide (P₂O₅), 0 to 0.6 wt% of antimony trioxide (Sb₂O₃) and 0 to 40 wt% of lead oxide (PbO).

The glass composition according to the present invention includes BaO and SrO replaced by boron oxide, sodium oxide etc. which raise the manufacturing cost. In the glass composition according to the present invention, the amount of boron oxide etc. is decreased or zero. The glass composition according to the present invention includes 0 to 6 wt% of boron oxide.

A glass composition according to the invention is provided in the form of small grains with an average diameter between 3 and 12 µm, more preferably between 4 and 8 µm for the purpose of stabilizing the thermal characteristics of the inorganic fiber molding prepared from it.

The raw material of a glass composition according to the invention may be all cullet or cullet compounded with a batch material (which may contain feldspar, dolomite, soda ash, borax, etc.). While cathode ray tube glass cullet is used as raw material of the glass composition according to the invention, plate glass cullet, bottle glass cullet and/or cullet originating from table ware glass and art glass may be added thereto. The expression of cathode ray tube glass as used herein does not simply refer to that of television sets but also that of displays of personal computers etc. Cathode ray tube glass contains barium oxide BaO and strontium oxide SrO, and these ingredients prevent the glass softening point and the glass viscosity from falling, and prevent the liquid phase viscosity from rising, and improve the mechanical durability of an inorganic fiber molding according to the invention.

Preferably, the raw material contains 5 to 100 wt% of cathode ray tube glass. The cullet of cathode ray tube glass has an average grain size of 5 to 60 mm, although the present invention does not exclude the use of cullet with an average grain size of less than 5 mm and that of more than 60 mm. If the raw material contains cathode ray tube glass by less than 5 wt%, it will not be possible to secure the necessary SrO content, and hence expensive SrO will have to be added further. If cathode ray tube glass cullet has the above described composition (45 to 75 wt% SiO₂, 1 to 6 wt% Al₂O₃, 0 to 4 wt% MgO, 0 to 15 wt% CaO, 0.1 to 10 wt% BaO, 0.1 to 25 wt% SrO, 5 to 17 wt% Na₂O, 0.5 to 10 wt% K₂O, 0 to 3.5 wt% Fe₂O₃), cathode ray tube glass cullet can be used as raw material, without the addition of the other material. Thus, according to the present invention, cathode ray tube glass can be recycled with reduced manufacturing cost.

A compounding method as described below can be used for a glass composition according to the invention. The source materials (including cathode ray tube glass cullet along with, if necessary, plate glass cullet, bottle glass cullet and a batch material) are individually fed to and stored in respective silos/storage tanks by conveyors or air transportation means. The necessary amounts of source materials are measured by means of specified respective meters, and taken out from the respective silos/storage tanks fed with and storing respective source materials. They are then fed to a mixing silo by air transportation means. The source materials fed to the mixing silo are then mixed and compounded to prepare a glass composition according to the invention. The prepared glass composition is then transported to a furnace feeding silo arranged in front of a glass melting furnace.

The glass composition to be used for manufacturing inorganic fiber according to the invention can be used to produce glass fiber, glass wool and rock wool. A known method such as a centrifugal method or a flame method can be utilized for manufacturing glass wool from a glass composition according to the invention.

Furthermore, an inorganic fiber molding (a glass wool molding in particular) used as insulator article and sound absorber can be manufactured from inorganic fiber, glass wool in particular, prepared by using the glass composition according to the invention.

For manufacturing a glass wool molding, it is preferable to use a binding agent or a binder containing thermosetting resin such as phenol resin as principal ingredient in order to maintain the shape of the glass wool molding and provide it with load characteristics. Other thermosetting resin, epoxy or melamine etc. may alternatively be used.

The binder is blown to molten glass in the form of fine glass filaments in about 5% of an adhesion ratio. Any known method may be used for blowing the binding agent.

A density of the glass wool molding may vary depending on an required characteristics as thermal insulator/sound absorber. It is normally between 7 and 300 kg/m³.

The glass wool molding has dimensions including 12-300 mm of a height or thickness, 260-1100 mm of a width and 605-22000 mm of a length, although the present invention is by no means limited to these numerical values.

Whenever necessary, a coating material can be applied to a surface of the thus obtained glass wool molding. Coating materials used for the purpose of the invention include glass cloth, vinyl chloride, organic unwoven cloth and other known coating materials. Such coating material can be bonded by a known method, such as a hot melt type adhesive agent or an organic solvent.

### Example 1

85 wt% of a cullet material (containing 42.5 wt% of plate glass cullet and 42.5 wt% of bottle glass cullet) and 15 wt% of cathode ray tube glass cullet of television sets were compounded, stirred and mixed to produce a glass composition as shown in Table 1 as described below. The average grain size of the cullet was 5 to 60mm.

The composition was molten, and the molten glass was driven to flow through a large number of pores by means of a centrifugal fiber forming equipment, to produce fine filaments. Table 1 also shows the viscosity, the softening point and the liquid phase temperature of the molten glass. The viscosity is expressed in terms of the temperature when the glass showed a viscosity of 10000 poises.

A phenol type binder was applied to the obtained glass wool in an adhesion ratio of 5 %. The glass fiber with the binder was condensed by means of a fiber condenser, dried, and cut to produce a glass wool molding of 10 kg/cm₃ × 50 mm × 430 mm × 1370 mm.

A polyethylene film with evaporation-deposited aluminum was bonded to an upper surface of the glass wool molding as coating material by means of a hot melt type adhesive agent, and a polyethylene film was bonded to a lower surface of the glass wool molding also as coating material by means of a hot melt type adhesive agent.

The thus obtained glass wool insulator was compressed to about 87 % by volume, and stored in the compressed state. After 1 month and 3 month, the restoring rate was observed. The restoring rate was obtained by releasing the compressive force applied to the insulator, and measuring the height or the thickness of the glass wool insulator 4 hours after the release of the compressive force.

Table 1 summarily shows the obtained results.

### Comparative Example 1

The procedure of Example 1 was followed to obtain a glass wool molding and a glass wool insulator, except that a glass composition containing 50 wt% of plate glass cullet and 50 wt% of bottle glass cullet was used as raw material. In other words, no cathode ray tube glass cullet of television sets was used. Table 1 shows the composition of the glass composition used in this comparative example.

**Table 1**

| | Example 1 | Comparative Example 1 |
|---|---|---|
| | Plate glass cullet: 42.5 wt% | Plate glass cullet: 50 wt% |
| | Bottle glass cullet: 42.5 wt% | Bottle glass cullet: 50 wt% |
| | TV CRT glass cullet: 15 wt% | |
| SiO₂ | 69.28 % | 71.41 % |
| Al₂O₃ | 2.42 % | 2.15 % |
| CaO | 8.79 % | 9.45 % |
| MgO | 0.48 % | 1.90 % |
| Na₂O + K₂O | 14.43 % | 13.70 % |
| Fe₂O₃ | 0.23 % | 0.15 % |
| BaO | 1.36 % | 0 % |
| SrO | 1.87 % | 0 % |
| Others | 1.14 % | 1.24 % |
| Viscosity | 1025°C | 1035°C |
| Softening point | 720°C | 730°C |
| Liquid phase tmp. | 1005°C | 1040°C |
| Product restoring rate | | |
| 1 month after | 120 % | 115 % |
| 3 months after | 116 % | 110 % |

When the glass wool was produced, the viscosity of the specimen of Comparative Example 1 was 10000 poises at 1030°C, but the liquid phase temperature was 1040°C which was higher. Thus, the fiber forming operation of Comparative Example 1 was difficult, because of the high liquid phase temperature. To the contrary, the liquid phase temperature of the specimen of Example 1 was lower than the temperature at which the specimen showed a viscosity of 10000 poises, and therefore the fiber forming operation was easy. Additionally, both the softening point and the liquid phase temperature of Example 1 were lower than their counterparts of Comparative Example 1, and hence the load of the furnace was less in Example 1 than in Comparative Example 1.

The restoring rate of the insulator from the glass of Example 1 containing BaO and SrO was 120 % after 1 month of storage and 116 % after 3 months of storage, which were comparable to their counterparts of conventional glass compositions containing a lot of B₂O₃. On the other hand, the restoring rate of the insulator from the glass of Comparative Example 1 (without BaO and SrO) was 115 % after 1 month of storage and 110 % after 3 months of storage. The restoring rate significantly affects the thickness of the product when it is unpacked and the feeling of flexibility (resiliency) of the unpacked product. The specimen of Example 1 showed a quality comparable to that of known similar products, even if it was prepared by using a cathode ray tube glass.

In Example 1, it was proved that the restoring rate of the specimen of this example was substantially equal to that of known products, even if the specimen in Example 1 did not contain any B₂O₃. The specimen also showed a good mechanical durability. Thus, it was confirmed that the present invention can provide an advantageous glass composition to be used for manufacturing inorganic fiber and an excellent molding that can be obtained by using such a glass composition.

### Example 2, Example 3 and Comparative Example 2

The procedure of Example 1 was followed to prepare glass wool and glass wool moldings, except that glass compositions as illustrated in Table 2 were prepared by respectively compounding, stirring and mixing 60 wt% of plate and bottle glass cullet, 25 wt% of cathode ray tube glass cullet and 15 wt% of a batch material (Example 2) and 70 wt% of plate and bottle glass cullet, 20 wt% of cathode ray tube glass cullet and 10 wt% of a batch material (Example 3). Table 2 also shows the restoring rates of the glass wool moldings of Examples 2 and 3.

In Comparative Example 2, the procedure of Example 2 was followed to prepare glass wool and a glass wool molding, except that a batch material having a composition as shown in Table 2 was used. Table 2 also shows the restoring rate of the glass wool molding of Comparative Example 2.

**Table 2**

| | Example 2 | Example 3 | Comparative Example 2 |
|---|---|---|---|
| | Plate & bottle glass cullet: 60 wt% | Plate & bottle glass cullet: 70 wt% | Batch material: 100 wt% |
| | TV CRT glass cullet: 25 wt% | TV CRT glass cullet: 20 wt% | |
| | Batch material: 15 wt% | Batch material: 10 wt% | |
| SiO₂ | 58.70 % | 63.00 % | 63.72 % |
| Al₂O₃ | 3.41 % | 2.00 % | 3.28 % |
| CaO | 6.66 % | 7.80 % | 8.21 % |
| MgO | 1.18 % | 1.68 % | 1.83 % |
| Na₂O + K₂O | 16.92 % | 17.78 % | 16.59 % |
| Fe₂O₃ | 0.16 % | 0.14 % | 0.14 % |
| B₂O₃ | 4.82 % | 2.50 % | 4.82 % |
| BaO | 1.68 % | 1.65 % | 0 % |
| SrO | 4.16 % | 2.33 % | 0 % |
| Others | 2.31 % | 1.12 % | 1.41 % |
| Viscosity | 920°C | 940°C | 940°C |
| Softening point | 620°C | 645°C | 645°C |
| Liquid phase tmp. | 860°C | 900°C | 915°C |
| Product restoring rate | | | |
| 1 month after | 120 % | 118 % | 115 % |
| 3 months after | 116 % | 112 % | 110 % |

In the Example 2, 25 wt% of cathode ray tube glass cullet was added to the batch material containing B₂O₃. The fiber forming operation was conducted with ease, because there was a large difference between the temperature at which the viscosity became equal to 10000 poises and the liquid phase temperature.

In the Example 3, B₂O₃ content was reduced, and 20 wt% of cathode ray tube glass cutlet was added. The fiber forming operation was conducted with ease, because there was a large difference between the temperature at which the viscosity became equal to 10000 poises and the liquid phase temperature.

The specimens of Examples 2 and 3 showed restoring rates better than the specimen of Comparative Example 2, to prove that they had an improved excellent quality.

### Example 4 and Comparative Example 3

Glass wool moldings of 32 kg/cm³ × 50 mm × 605 mm × 910 mm were prepared. Glass cloth was applied to an upper surface of each of the glass wool molding as coating material, and bonded thereto by means of a hot melt type adhesive agent, to produce a glass wool thermal insulator. The compression strength was observed subsequently (Example 4). One of the thus obtained thermal insulator was compressed to 10% by volume, the other of the thus obtained insulator was compressed to 50% by volume, and the compression strength of the specimen 4 was observed twice, 1 month after and 3 months after the preparation of the specimen.

The procedure of Example 4 was followed in Comparative Example 3 to prepare glass wool, a glass wool molding and a glass wool thermal insulator, except that the composition contained 70 wt% of plate glass cullet and 30 wt% of bottle glass cullet as shown in Table 3. The compression strength of the specimen of Comparative Example 3 was also observed.

**Table 3**

| | Example 4 | Comparative Example 3 |
|---|---|---|
| | Plate glass cullet: 42.5 wt% | Plate glass cullet: 70 wt% |
| | Bottle glass cullet: 42.5 wt% | Bottle glass cullet: 30 wt% |
| | TV CRT glass cullet: 15 wt% | |
| SiO₂ | 69.28 % | 71.15 % |
| Al₂O₃ | 2.42 % | 1.86 % |
| CaO | 8.79 % | 9.26 % |
| MgO | 0.48 % | 2.49 % |
| Na₂O + K₂O | 14.43 % | 14.61 % |
| Fe₂O₃ | 0.23 % | 0.16 % |
| BaO | 1.36 % | 0 % |
| SrO | 1.87 % | 0 % |
| Others | 1.14 % | 0.47 % |
| Viscosity | 1025°C | 1040°C |
| Softening point | 720°C | 735°C |
| Liquid phase tmp. | 1005°C | 1035°C |
| Product | | |
| compression | | |
| strength | | |
| 1 month after | | |
| 10 % | 1960 Pa | 1764 Pa |
| 50 % | 11662 Pa | 11564 Pa |
| 3 months after | | |
| 10 % | 1960 Pa | 1764 Pa |
| 50 % | 11613 Pa | 11515 Pa |

The compression strength of the product of glass wool insulator of Example 1 was 1960 Pa for 10 % compression and 11662 Pa for 50 % compression 1 month after the preparation, and 1960 Pa for 10 % compression and 11613 Pa for 50 % compression 3 month after the preparation. Thus, it showed improved mechanical characteristics if compared with conventional products.

### Example 5 and Example 6

The procedure of Example 1 was followed in Example 5, except that 100 % of cathode ray tube glass cullet of television sets was used as shown in Table 4 indicated below.

Similarly, the procedure of Example 1 was followed in Example 6, except that 10 wt% of cathode ray tube glass cullet of television sets and 90 wt% of plate and other glass cullet were used as shown in Table 4.

**Table 4**

| | Example 5 | Example 6 |
|---|---|---|
| | TV CRT glass cullet: 100 wt% | TV CRT glass cullet: 10 wt% |
| | | Plate glass and other glass cullet: 90 wt% |
| SiO₂ | 60.57 % | 70.85 % |
| Al₂O₃ | 2.47 % | 1.08 % |
| CaO | 0.21 % | 9.50 % |
| MgO | 0.04 % | 0 % |
| Na₂O + K₂O | 13.12 % | 14.80 % |
| Fe₂O₃ | 0.008 % | 0.01 % |
| BaO | 9.04 % | 1.00 % |
| SrO | 12.47 % | 1.25 % |
| Others | 2.07 % | 1.51 % |
| Viscosity | 1015°C | 1030°C |
| Softening point | 700°C | 725°C |
| Liquid phase tmp | 860°C or less | 1025°C |
| Product restoring rate | | |
| 1 month after | 120 % | 119 % |
| 3 months after | 116 % | 114 % |

It was proved by Example 5 that a glass composition whose viscosity, softening point and liquid phase temperature are very low can be obtained by using 100 % of cathode ray tube glass cullet. A glass wool thermal insulator prepared by using such a glass composition showed a restoring rate equal to or better than that of conventional products.

Although the specimen of glass composition of Example 6 did not contain any magnesium oxide, a glass wool thermal insulator prepared by using such glass composition showed a restoring rate equal to or better than conventional products.

### Comparative Examples 4 through 7

The procedure of Example 1 was following in each of these comparative examples, except that the raw material having the glass composition was used as shown in Table 5. Note that the specimens of these comparative examples 4-7 were not included in the preferred extent (BaO + SrO = 0.5 to 25 wt%, CaO + MgO = 0.2 to 15 wt%, Na₂O + K₂O = 6 to 24 wt%), although these comparative examples 4-7 are included in the present invention. These comparative examples clearly show the advantages of the preferred extent.

**Table 5**

| | Comparative Example 4 | Comparative Example 5 | Comparative Example 6 | Comparative Example 7 |
|---|---|---|---|---|
| | Plate glass cullet: 49.8 wt% | Plate glass cullet: 49.8 wt% | TV CRT glass cullet: | TV CRT glass cullet: |
| | Bottle glass | Bottle glass | 40 wt% | 60 wt% |
| | cullet: 49.8 wt% | cullet: 49.8 wt% | Batch material: | Batch material: |
| | Batch material: | Batch material: | 60 wt% | 40 wt% |
| | 0.4 wt% | 0.4 wt% | | |
| SiO₂ | 71.02 % | 70.97 % | 53.01 % | 55.42 % |
| Al₂O₃ | 2.14 % | 2.10 % | 3.35 % | 2.83 % |
| CaO | 9.44 % | 9.40 % | 3.68 % | 3.96 % |
| MgO | 1.85 % | 1.88 % | 0.02 % | 0.02 % |
| Na₂O + K₂O | 14.69 % | 14.67 % | 7.18 % | 9.26 % |
| Fe₂O₃ | 0.17 % | 0.14 % | 0.004 % | 0.01 % |
| BaO | 0.35 % | 0.10 % | 5.05 % | 9.50 % |
| SrO | 0.10 % | 0.35 % | 24.50 % | 16.00 % |
| Others | 0.25 % | 0.40 % | 3.21 % | 3.00 % |
| Viscosity | 1035°C | 1035°C | 980°C | 970°C |
| Softening point | 730°C | 730°C | 675°C | 665°C |
| Liquid phase tmp. | 1040°C | 1040°C | 860°C | 860°C |
| | | | or less | or less |
| Product restoring rate | | | | |
| 1 month after | 115 % | 115 % | 116 % | 116 % |
| 3 months after | 110 % | 110 % | 111 % | 111 % |

Each of the BaO + SrO contents of the glass compositions was 0.45 wt% in the Comparative Example 4, 0.45 wt% in the Comparative Example 5, 29.55 wt% in the Comparative Example 6 and 25.5 wt% in the Comparative Example 7.

From Comparative Examples 4 through 7, it was found that if the BaO + SrO content is 0.5 wt% or more, the liquid phase temperature is relatively low to facilitate the fiber forming process. If the BaO + SrO content exceeds 25 wt%, the restoring rate of the prepared glass wool thermal insulator does not vary remarkably, but the above described preferred extent provides more excellent glass composition and moldings.

According to the present invention, a glass composition to be used for manufacturing inorganic fiber contains strontium oxide and barium oxide that entirely or partly replace expensive boron oxide. Thus, it is possible to lower the glass softening point in the glass melting process without using magnesium oxide that raises the glass viscosity and without using calcium oxide that raises the liquid phase temperature of glass. Therefore, the prensent invention provides a glass composition in an energy saving manner. In addition, the manufacturing facility is not corroded, and the fiber forming operation is also facilitated. Since the liquid phase temperature is low, pores are not clogged due to the crystalization of the glass. It is possible to manufacture an inorganic fiber molding showing a product restoring rate equal to or better than comparative conventional inorganic fiber moldings by using a glass composition of the invention.

If the glass composition includes 0.5 to 25 wt% of BaO + SrO, it is not necessary to add expensive batch material of BaO and SrO at all. If the glass compsition includes 0.2 to 15 wt% of CaO + MgO, it is possible to prevent the liquid phase temperature from rising. If the glass composition includes 6 to 24 wt% of Na₂O + K₂O, it is possible to prevent the viscosity of the glass from rising, and it is posssible to provide chemical durability.

Furthermore, according to the invention, it is now possible to utilize cathode ray tube glass cullet of television sets that has not been used, so that the present invention can significantly save precious resources of the earth and expand the scope of application of bottle glass cullet for the purpose of recycling of resources.

Finally, the present invention provides a glass wool molding whose quality and strength are equal to or better than those of conventional moldings that are formed by using expensive boron oxide as ingredient.

## Claims

1. Glass composition to be used for manufacturing inorganic fiber, said glass composition containing 45 to 75 wt% of SiO₂, 1 to 6 wt% of Al₂O₃, 0 to 4 wt% of MgO, 0 to 15 wt% of CaO, 0 to 6 wt% of B₂O₃, 0.1 to 10 wt% of BaO, 0.1 to 25 wt% of SrO, 5 to 17 wt% of Na₂O, 0.5 to 10 wt% of K₂O and 0 to 3.5 wt% of Fe₂O₃.

2. The glass composition according to claim 1, wherein
said glass composition contains
0.5 to 25 wt% of BaO and SrO,
0.2 to 15 wt% of CaO and MgO, and
6 to 24 wt% of Na₂O + K₂O.

3. The glass composition according to claim 1 or 2, wherein
said glass composition is made of a raw material for manufacturing the composition containing 5 to 100 wt% of cathode ray tube glass.

4. A method of manufacturing an inorganic fiber molding, said method comprising:
melting a glass composition to be used for manufacturing inorganic fiber according to claim 1, 2 or 3 in a melting furnace;
fining the molten glass composition into fine glass fiber in a fiber forming equipment;
blowing a binder to the glass fiber to provide it with shape stability and load characteristics;
molding the glass fiber into the inorganic fiber molding having a predetermined density and a predetermined thickness by means of a fiber condenser and a drier, and
subsequently cutting the molding to produce a finished product.

5. An inorganic fiber molding manufactured by using the glass composition to be used for manufacturing inorganic fiber according to claim 1, 2 or 3.
